# EUROPEAN PATENT SPECIFICATION

(11) **EP 3 384 508 B1**
(45) Date of publication and mention of the grant of the patent: **26.02.2020**
(21) Application number: 16808974.6
(22) Date of filing: 02.12.2016
(51) Int. Cl.: H01B 3/56, H02B 13/055, H01H 33/64

(54) **METHODS FOR DIELECTRICALLY INSULATING ELECTRICAL ACTIVE PARTS**
VERFAHREN ZUR DIELEKTRISCHEN ISOLIERUNG VON AKTIVEN ELEKTRISCHEN TEILEN
PROCEDES D'ISOLATION DIELECTRIQUE DE COMPOSANTS ELECTRIQUES ACTIFS

(30) Priority: 04.12.2015 EP 15197935
(43) Date of publication of application: 10.10.2018
(73) Proprietor: Solvay SA, 1120 Bruxelles (BE)
(72) Inventor: FABRE, Jean, D-30457 Wettbergen (DE); HARDINGHAUS, Ferdinand, D-53604 Bad Honnef (DE); PERNICE, Holger, DE-30173 Hannover (DE); HASENSTAB-RIEDEL, Sebastian, 14532 Kleinmachnow (DE); BECKERS, Helmut, 02826 Görlitz (DE); STEINHAUER, Simon, 14193 Berlin (DE); VENT-SCHMIDT, Thomas, 79853 Lenzkirch (DE)
(74) Representative: Mross, Stefan P.M.
(86) International application number: PCT/EP2016/079621
(87) International publication number: WO 2017/093501

(56) References cited:
- WO-A1-2014/135680
- DATABASE WPI Week 197836 Thomson Scientific, London, GB; AN 1978-64783A XP002757598, -& SU 576 634 A1 (KUZNETSOV F I) 15 October 1977 (1977-10-15)
- BRIAN C. BISHOP ET AL: JOURNAL OF THE AMERICAN CHEMICAL SOCIETY, vol. 85, no. 11, 1 June 1963 (1963-06-01), pages 1606-1608, XP055272051, US ISSN: 0002-7863, DOI: 10.1021/ja00894a015 cited in the application

## Description

This application claims priority to European application No. 15197935.8 filed on the 4th of December 2015.

The invention concerns methods for dielectrically insulating electrical active parts using certain fluoroamines as well as compositions and apparatus comprising such compounds.

Dielectrically insulation media in liquid or gaseous state are applied for the insulation of electrical active parts in a wide variety of electrical apparatus, e.g. in switchgears or transformers.

Mixtures of SF₆ and N₂ are widely applied as dielectrically insulating medium. Efforts have been made in the past to provide alternative dielectrically insulating media.

WO 2014/096414 concerns a method of dielectrically insulating electrical active parts using certain fluorinated compounds, e.g. fluorinated ethers and peroxides. WO 2014/135680 A1 discloses a dielectric insulation gas comprising an organofluorine compound.

JP 08291299 apparently describes the use of NF(CF₃)(C₂F₅) as an etching gas for cleaning films in chemical vapour deposition. Thus, NF(CF₃)(C₂F₅) is decomposed and used as a source for radicals, e.g. fluorine radicals.

The object of the present invention is to provide improved methods and/or compositions for the electrical insulation of electrical active parts.

Advantageously, the methods and compositions of the present invention show improved insulation, arc-extinguishing and/or switching performance. Also advantageously, the methods and compositions of the present invention show advantageous environmental impact when the insulating medium is released into the atmosphere, e.g. as measured by an improved global warming potential (GWP) and/or improved ozone depletion. Also advantageously, the methods and compositions of the present invention show an improved toxicological behavior, as measured for example by a higher LC50 and/or a higher Occupational Exposure Limit. Furthermore, the methods and compositions advantageously show an improved dew point, vapour pressure, boiling point, dielectrical strengths, and/or thermal stability of the insulating media. Additionally, the compositions according to this invention advantageously show an improved chemical inertness against the construction materials used e.g. for the electrical active parts and/or improved heat transfer properties.

These and other objectives are solved by the present invention as outlined in the claims.

Accordingly, a first aspect of the present invention concerns a method for dielectrically insulating an electrical active part wherein the electrical active part is arranged in a gas-tight housing comprising an insulating medium consisting of, consisting essentially of, or comprising a compound of general formula (I): F-N(CₙHₘF₍₂ₙ₊₁₎₋ₘ)(C_{n'}H_{m'}F_{(2n'+1)-m'}), wherein n is 1, 2, 3, 4, or 5 and m is an integer between 0 and 2n and wherein n' is 2, 3, 4, or 5 and m' is an integer between 0 and 2n'.

Thus, the compounds according to the general formula above contain an fluoroamine function (F-N) which is substituted with two optionally fluorinated alkyl groups.

The term "consisting essentially of' as used herein is intended to denote a composition comprising the components as specified as well as other components in trace amounts wherein the presence of the other components does not change the essential characteristics of the specified subject matter.

Preferably, the compounds according to the invention are perfluorinated, i.e. m and m' are 0. Hence, all hydrogen atoms are replaced by fluorine atoms.

Also preferably, n is 1, i.e. one alkyl function is -CHₘF₍₂ₙ₎₋ₘ, more preferably one alkyl function is -CF₃.

Also preferably, n' is 2, i.e. one alkyl function is -C₂H_{m'}F_{(2n'+1)-m'}, more preferably one alkyl function is -C₂F₅.

In a preferred embodiment, n and n' are the same. In an alternative preferred embodiment, n and n' are different, more preferably n' is n+1.

In a preferred embodiment, m and m' are the same. In an alternative preferred embodiment, m and m' are different.

Most preferably, the compound of general formula (I) is NF(CF₃)(C₂F₅), pentafluoroethyl-trifluoromethyl fluoroamine or N-fluoroperfluoro(ethyl, methyl) amine.

In the frame of the present invention, the singular is intended to include the plural, and vice versa.

Compounds of general formula (I) can be prepared as described in Bishop, B.C. et al., Journal of the American Chemical Society, 1963, 85, pp. 1606-08; Robson, P. et al, Journal of the American Chemical Society, 1961, 83, pp. 5010-15, Moldavskii, D.D., Journal of Organic Chemistry of the USSR, Vol. 7, pp. 44-46 and Sartori, P., Journal of Fluorine Chemistry, 1997, 83, pp.1-8.

Preferably, the insulating medium used in the inventive method comprises the compound of formula (I) and at least one further compound selected from the list consisting of an inert gas, a perfluorinated or partially fluorinated ketone, a perfluorinated or partially fluorinated ether, a perfluorinated or partially fluorinated ester, a perfluorinated or partially fluorinated cyano compound and a hydrocarbon compound. More preferably, the at least one compound is an inert gas selected from the group consisting of air, synthetic air, an air component, N₂, O₂, CO₂, N₂O, He, Ne, Ar, Xe and SF₆; preferably the at least one compound is N₂.

The term "inert gas" is intended to denote a gas that does not react with the compounds according to the invention. Preferably, the inert gas is chosen from the list consisting of air, synthetic air, an air component, N₂, O₂, CO₂, N₂O, He, Ne, Ar, Xe or SF₆; more preferably, the inert gas is N₂.

Preferably, the at least one compound is a perfluorinated or partially fluorinated ketone. The term "ketone" is intended to denote a compound incorporating at least one carbonyl group with two carbon atoms attached to the carbon of the carbonyl group. It shall encompass saturated compounds and unsaturated compounds including double and/or triple bonds. The at least partially fluorinated alkyl chain of the ketones can be linear or branched. The term "ketone" shall also encompass compounds with a cyclic carbon backbone. The term "ketone" may comprise additional in-chain hetero-atoms, e.g. at least one heteroatom being part of the carbon backbone and/or being attached to the carbon backbone. More preferably, the at least one compound is a perfluorinated ketone. Examples of suitable perfluorinated ketones include 1,1,1,3,4,4,4-heptafluoro-3-(trifluoromethyl)-butan-2-one; 1,1,1,3,3,4,4,5,5,5-decafluoropentan-2-one; 1,1,1,2,2,4,4,5,5,5-decafluoropentan-3-one, 1,1,1,4,4,5,5,5,-octafluoro-3-bis-(trifluoromethyl)-pentan-2-one; and most preferably heptafluoroisopropyl-trifluoromethyl-ketone.

Also preferably, the at least one compound is a perfluorinated or partially fluorinated ether. The term "ether" is intended to denote a compound incorporating at least one "-C-O-C-" moiety. Especially suitable examples include pentafluoro-ethyl-methyl ether and 2,2,2-trifluoroethyl-trifluoromethyl ether.

Also preferably, the at least one compound is a perfluorinated or partially fluorinated ester, i.e. a compound incorporating at least one "-C(O)O-" moiety. Suitable compounds are known in the art, especially suitable examples include methyl, ethyl, and trifluoromethyl esters of trifluoroacetic acid.

Also preferably, the at least one compound is a perfluorinated or partially fluorinated cyano compound, i.e. a compound incorporating at least one moiety of the structure "-C≡N". Preferably, the cyano compound is perfluorinated, more preferably the cyano compound is chosen from the list consisting of perfluorinated methyl, ethyl, isopropyl, propyl, butyl, isobutyl and tertbutyl nitrile.

Also preferably, the at least one compound is a perfluorinated or partially fluorinated hydrocarbon compound. "Hydrocarbon compound" is intended to denote a saturated or unsaturated hydrocarbon, which may in addition to the fluoro substitution also be substituted by other halogen atoms, e.g. Cl, Br, and/or I. Suitable examples include CHF₃, C₂F₄, CF₃CF₂CF₂CF₂I , and CF₂Cl₂.

The term "electrical active part" has to be understood very broadly. Preferably, it covers any part which is used for the generation, the distribution or the usage of electrical energy provided it comprises a gas-tight housing wherein the dielectrically insulating medium provides for the dielectrically insulation of parts which bear voltage or current. Preferably, the electrical active parts are medium voltage or high voltage parts. The term "medium voltage" relates to a voltage in the range of 1 kV to 72 kV ; the term "high voltage" refers to a voltage of more than 72 kV. While these are preferred electrical active parts in the frame of the present invention, the parts may also be low voltage parts with a voltage below 1 kV being concerned.

It has to be noted that the electrical active parts of the invention can be "stand alone" parts, or they can be part of an assembly of parts, e.g. of an apparatus. This will now be explained in detail.

The electrical active part can be a switch, for example, a fast acting earthing switch, a disconnector, a load-break switch or a puffer circuit breaker, in particular a medium-voltage circuit breaker (GIS-MV), a generator circuit breaker (GIS-HV), a high voltage circuit breaker, a bus bar a bushing, a gas-insulated cable, a gas-insulated transmission line, a cable joint, a current transformer, a voltage transformer or a surge arrester.

The electrical active part may also be part of an electrical rotating machine, a generator, a motor, a drive, a semiconducting device, a computing machine, a power electronics device or high frequency parts, for example, antennas or ignition coils.

The method of the invention is especially suited for medium voltage switchgears and high voltage switchgears.

The insulating medium used in the method of the invention is preferably in the gaseous state when used in the method of the invention. However, depending on the conditions, e.g. the temperature and the pressure, under which the method is performed, the insulating medium can also be, at least partially, in the liquid state.

In the electrical active part, the insulating medium is preferably at a pressure of equal to or greater than 0.1 bar (abs.). The insulating medium is preferably at a pressure equal to or lowers than 30 bar (abs). A preferred pressure range is from 1 to 20 bar (abs.).

The partial pressure of the compound of general structure (I) in the gaseous phase depends, i.a. upon its concentration in the isolating medium. If the dielectrically isolating medium consists of the compound of general structure (I) its partial pressure is equal to the total pressure and corresponds to the ranges given above. If the medium includes an inert gas, the partial pressure of the compound of general structure (I) is correspondingly lower. A partial pressure of the compound of general structure (I) which is equal to or lower than 10 bar (abs) is preferred.

It is also preferred that the compound or the mixture, respectively, is such that under the climate conditions or the temperature in the ambience of the electrical apparatus, under the pressure in the electrical part, essentially no condensation of the components in the dielectrically insulating medium occurs. The term "essentially no condensation" denotes that at most 5 % by weight, preferably at most 2 % by weight, of the dielectrically insulating medium condenses. For example, the amounts of compound of formula (I) the kind and amount of inert gas are selected such that the partial pressure of compound of formula (I) is lower than the pressure where condensation of compound of formula (I) is observed at -20°C.

In a second aspect, the present invention concerns a composition consisting of, consisting essentially of, or comprising at least one compound of general formula (I): F-N(CₙHₘF₍₂ₙ₊₁₎₋ₘ)(C_{n'}H_{m'}F_{(2n'+1)-m'}), wherein n is 1, 2, 3, 4, or 5 and m is an integer between 0 and 2n and wherein n' is 2, 3, 4, or 5 and m' is an integer between 0 and 2n'; and at least one further compound selected from the group consisting of an inert gas, a perfluorinated or partially fluorinated ketone, a perfluorinated or partially fluorinated ether, a perfluorinated or partially fluorinated ester, a perfluorinated or partially fluorinated cyano compound and a hydrocarbon compound.

Preferably, the composition consists of, consists essentially of, or comprises NF(CF₃)(C₂F₅) and at least one compound selected from the group consisting of an inert gas, a perfluorinated or partially fluorinated ketone, a perfluorinated or partially fluorinated ether, a perfluorinated or partially fluorinated ester, a perfluorinated or partially fluorinated cyano compound and a hydrocarbon compound.

More preferably, the composition consists of, consists essentially of, or comprises NF(CF₃)(C₂F₅) and at least one compound selected from the group consisting of air, synthetic air, an air component, N₂, O₂, CO₂, N₂O, He, Ne, Ar, Xe or SF₆; preferably consisting of, consisting essentially of, or comprising NF(CF₃)(C₂F₅) and N₂.

In a third object, the present invention concerns an apparatus for the generation, distribution and/or usage of electrical energy wherein the apparatus comprises an electrical active part arranged in a gas-tight housing and said gas-tight housing containing an insulating medium comprising, consisting essentially of, or consisting of at least one compound of general formula (I): F-N(CₙHₘF₍₂ₙ₊₁₎₋ₘ)(C_{n'}H_{m'}F_{(2n'+1)-m'}), wherein n is 1, 2, 3, 4, or 5 and m is an integer between 0 and 2n and wherein n' is 2, 3, 4, or 5 and m' is an integer between 0 and 2n'; or containing an insulating medium consisting of, consisting essentially of, or comprising the inventive composition as defined above. Preferably, the insulating medium consists of, consists essentially of, or comprises NF(CF₃)(C₂F₅). Also preferably, the apparatus is a medium-voltage or high-voltage switchgear.

Another object of the present invention concerns the use of the compounds or the mixtures of this invention, as herein described, as dielectrically insulating medium or as constituent of a dielectrically insulating medium as well as their use as an dry etching agent, e.g. a chamber cleaning agent, specifically, for plasma-enhanced chamber cleaning as a replacement for NF₃.

Another object of the present invention is the use of the compounds of general formula (I) as replacements for fluorocarbons or hydrofluorocarbons as blowing agents in the manufacture of closed-cell polyurethane, phenolic and thermoplastic foams, as propellants in aerosols, as heat transfer media, as fire extinguishing agents, as power cycle working fluids such as for heat pumps, as inert media for polymerization reactions, as fluids for removing particulates from metal surfaces, as carrier fluids that may be used, for example, to place a fine film of lubricant on metal parts, as buffing abrasive agents to remove buffing abrasive compounds from polished surfaces such as metal, as displacement drying agents for removing water, such as from jewellery or metal parts, as resist developers in conventional circuit manufacturing techniques including chlorine-type developing agents, or as strippers for photoresists when used with, for example, a chlorohydrocarbons such as 1,1,1-trichloroethane or trichloroethylene.

Another object of the present invention is the use of a compound of general formula (I): F-N(CnHmF(2n+1)-m)(Cn'Hm'F(2n'+1)-m') wherein n is 1, 2, 3, 4, or 5 and m is an integer between 0 and 2n and wherein n' is 2, 3, 4, or 5 and m' is an integer between 0 and 2n' as a dielectric medium to insulate an electrical active part. The preferred electrical active part can be a switch, for example, a fast acting earthing switch, a disconnector, a load-break switch or a puffer circuit breaker, in particular a medium-voltage circuit breaker (GIS-MV), a generator circuit breaker (GIS-HV), a high voltage circuit breaker, a bus bar a bushing, a gas-insulated cable, a gas-insulated transmission line, a cable joint, a current transformer, a voltage transformer or a surge arrester.

The following examples further explain the invention without intention to limit it.

### Examples

### Example 1a: Manufacture of NF(CF₃)(C₂F₅)

NF(CF₃)(C₂F₅) is prepared according to Sartori, P., Journal of Fluorine Chemistry, 1997, 83, pp. 1-8.

### Example 1b: Manufacture of the compositions

As described in WO98/23363, a homogenous mixture consisting NF(CF₃)(C₂F₅) and N₂ in a volume ratio 1:4 is manufactured in an apparatus comprising a static mixer and a compressor.

### Example 2: Provision of an earth cable containing the dielectrically insulating medium of example 1

The composition of example 1b is directly fed into an earth cable for high voltage, until a total pressure of 10 bar (abs) is achieved in the cable.

### Example 3: A switchgear containing NF(CF₃)(C₂F₅) and N₂ in a volume ratio 1:4

A switchgear is used which contains a switch surrounded by a gas-tight metal case. The composition of example b1 is passed into the gas tight metal case via a valve until a pressure of 18 bar (abs) is achieved.

## Claims

1. A method for dielectrically insulating an electrical active part wherein the electrical active part is arranged in a gas-tight housing comprising an insulating medium consisting of, consisting essentially of, or comprising a compound of general formula (I):
F-N(CₙHₘF₍₂ₙ₊₁₎₋ₘ)(C_{n'}H_{m'}F_{(2n'+1)-m'}) (I)
wherein n is 1, 2, 3, 4, or 5 and m is an integer between 0 and 2n and wherein n' is 2, 3, 4, or 5 and m' is an integer between 0 and 2n'.

2. The method according to claim 1 wherein n is 1.

3. The method according to claim 1 or 2 wherein n' is 2.

4. The method according to any one of claims 1 to 3 wherein m is 0.

5. The method according to any one of claims 1 to 4 wherein m' is 0.

6. The method according to claim 1 where the compound is pentafluoroethyl-trifluoromethyl fluoroamine NF(CF₃)(C₂F₅).

7. A composition consisting of, consisting essentially of, or comprising at least one compound of general formula (I)
F-N(CₙHₘF₍₂ₙ₊₁₎₋ₘ)(C_{n'}H_{m'}F_{(2n'+1)-m'}) (I)
wherein n is 1, 2, 3, 4, or 5 and m is an integer between 0 and 2n and wherein n' is 2, 3, 4, or 5 and m' is an integer between 0 and 2n' and at least one further compound selected from the group consisting of an inert gas, a perfluorinated or partially fluorinated ketone, a perfluorinated or partially fluorinated ether, a perfluorinated or partially fluorinated ester, a perfluorinated or partially fluorinated cyano compound and a hydrocarbon compound.

8. The composition according to claim 7 consisting of, consisting essentially of, or comprising NF(CF₃)(C₂F₅) and at least one compound selected from the group consisting of an inert gas, a perfluorinated or partially fluorinated ketone, a perfluorinated or partially fluorinated ether, a perfluorinated or partially fluorinated ester, a perfluorinated or partially fluorinated cyano compound and a hydrocarbon compound.

9. The composition of claim 8 consisting of, consisting essentially of, or comprising NF(CF₃)(C₂F₅) and at least one compound selected from the group consisting of air, synthetic air, an air component, N₂, O₂, CO₂, N₂O, He, Ne, Ar, Xe or SF₆; preferably consisting of, consisting essentially of, or comprising NF(CF₃)(C₂F₅) and N₂.

10. An apparatus for the generation, distribution and/or usage of electrical energy wherein the apparatus comprises an electrical active part arranged in a gas-tight housing, said gas-tight housing containing an insulating medium consisting of, consisting essentially of, or comprising at least one compound of general formula (I)
F-N(CₙHₘF₍₂ₙ₊₁₎₋ₘ)(C_{n'}H_{m'}F_{(2n'+1)-m'}) (I)
wherein n is 1, 2, 3, 4, or 5 and m is an integer between 0 and 2n and wherein n' is 2, 3, 4, or 5 and m' is an integer between 0 and 2n';
or containing an insulating medium consisting of, consisting essentially of, or comprising the composition according to any one of claims 7 to 9.

11. The apparatus of claim 10 wherein the insulating medium consists of, consists essentially of, or comprises NF(CF₃)(C₂F₅).

12. The apparatus of claim 10 or 11 wherein the apparatus is a medium-voltage or high-voltage switchgear.

13. Use of a compound of general formula (I):
F-N(CₙHₘF₍₂ₙ₊₁₎₋ₘ)(C_{n'}H_{m'}F_{(2n'+1)-m'}) (I)
wherein n is 1, 2, 3, 4, or 5 and m is an integer between 0 and 2n and wherein n' is 2, 3, 4, or 5 and m' is an integer between 0 and 2n' as a dielectric medium to insulate an electrical active part.

## Patentansprüche

1. Verfahren zum dielektrischen Isolieren eines elektrisch aktiven Teils, wobei der elektrisch aktive Teil in einem gasdichten Gehäuse angeordnet ist, das ein isolierendes Medium bestehend aus, im Wesentlichen bestehend aus oder umfassend eine/einer Verbindung der allgemeinen Formel (I) umfasst:
F-N(CₙHₘF₍₂ₙ₊₁₎₋ₘ)(C_{n'}H_{m'}F_{(2n'+1)-m'}) (I),
wobei n 1, 2, 3, 4 oder 5 ist und m eine ganze Zahl zwischen 0 und 2n ist und wobei n' 2, 3, 4 oder 5 ist und m' eine ganze Zahl zwischen 0 und 2n' ist.

2. Verfahren gemäß Anspruch 1, wobei n 1 ist.

3. Verfahren gemäß Anspruch 1 oder 2, wobei n' 2 ist.

4. Verfahren gemäß einem der Ansprüche 1 bis 3, wobei m 0 ist.

5. Verfahren gemäß einem der Ansprüche 1 bis 4, wobei m' 0 ist.

6. Verfahren gemäß Anspruch 1, wobei die Verbindung Pentafluorethyltrifluormethylfluoramin NF(CF₃) (C₂F₅) ist.

7. Zusammensetzung bestehend aus, im Wesentlichen bestehend aus oder umfassend wenigstens eine/einer Verbindung der allgemeinen Formel (I):
F-N(CₙHₘF₍₂ₙ₊₁₎₋ₘ)(C_{n'}H_{m'}F_{(2n'+1)-m'}) (I),
wobei n 1, 2, 3, 4 oder 5 ist und m eine ganze Zahl zwischen 0 und 2n ist und wobei n' 2, 3, 4 oder 5 ist und m' eine ganze Zahl zwischen 0 und 2n' ist, und wenigstens eine weitere Verbindung ausgewählt aus der Gruppe bestehend aus einem Inertgas, einem perfluorierten oder teilfluorierten Keton, einem perfluorierten oder teilfluorierten Ether, einem perfluorierten oder teilfluorierten Ester, einer perfluorierten oder teilfluorierten Cyanoverbindung und einer Kohlenwasserstoffverbindung.

8. Zusammensetzung gemäß Anspruch 7, bestehend aus, im Wesentlichen bestehend aus oder umfassend NF(CF₃)(C₂F₅) und wenigstens einer Verbindung ausgewählt aus der Gruppe bestehend aus einem Inertgas, einem perfluorierten oder teilfluorierten Keton, einem perfluorierten oder teilfluorierten Ether, einem perfluorierten oder teilfluorierten Ester, einer perfluorierten oder teilfluorierten Cyanoverbindung und einer Kohlenwasserstoffverbindung.

9. Zusammensetzung gemäß Anspruch 8, bestehend aus, im Wesentlichen bestehend aus oder umfassend NF(CF₃)(C₂F₅) und wenigstens einer Verbindung ausgewählt aus der Gruppe bestehend aus Luft, synthetischer Luft, einer Luftkomponente, N₂, O₂, CO₂, N₂O, He, Ne, Ar, Xe und SF₆; vorzugsweise bestehend aus, im Wesentlichen bestehend aus oder umfassend NF(CF₃) (C₂F₅) und N₂.

10. Vorrichtung für die Erzeugung, Verteilung und/oder Verwendung von elektrischer Energie, wobei die Vorrichtung einen elektrisch aktiven Teil umfasst, der in einem gasdichten Gehäuse angeordnet ist, wobei das gasdichte Gehäuse ein isolierendes Medium bestehend aus oder im Wesentlichen bestehend aus oder umfassend wenigstens eine/einer Verbindung der allgemeinen Formel (I) enthält:
F-N(CₙHₘF₍₂ₙ₊₁₎₋ₘ)(C_{n'}H_{m'}F_{(2n'+1)-m'}) (I),
wobei n 1, 2, 3, 4 oder 5 ist und m eine ganze Zahl zwischen 0 und 2n ist und wobei n' 2, 3, 4 oder 5 ist und m' eine ganze Zahl zwischen 0 und 2n' ist;
oder ein isolierendes Medium bestehend aus, im Wesentlichen bestehend aus oder umfassend die/der Zusammensetzung gemäß einem der Ansprüche 7 bis 9 enthält.

11. Vorrichtung gemäß Anspruch 10, wobei das isolierende Medium aus NF(CF₃) (C₂F₅) besteht, im Wesentlichen daraus besteht oder es umfasst.

12. Vorrichtung gemäß Anspruch 10 oder 11, wobei die Vorrichtung eine Mittelspannungs- oder Hochspannungsschaltanlage ist.

13. Verwendung einer Verbindung der allgemeinen Formel (I):
F-N(CₙHₘF₍₂ₙ₊₁₎₋ₘ)(C_{n'}H_{m'}F_{(2n'+1)-m'}) (I),
wobei n 1, 2, 3, 4 oder 5 ist und m eine ganze Zahl zwischen 0 und 2n ist und wobei n' 2, 3, 4 oder 5 ist und m' eine ganze Zahl zwischen 0 und 2n' ist, als dielektrisches Medium zum Isolieren eines elektrisch aktiven Teils.

## Revendications

1. Procédé d'isolation diélectrique d'une partie active électrique, dans lequel la partie active électrique est agencée dans un boîtier étanche aux gaz comprenant un milieu isolant constitué de, essentiellement constitué de, ou comprenant un composé de formule générale (I) :
F-N(CₙHₘF₍₂ₙ₊₁₎₋ₘ)(C_{n'}H_{m'}F_{(2n'+1)-m'} (I)
dans laquelle n est 1, 2, 3, 4 ou 5 et m est un entier compris entre 0 et 2n et dans laquelle n' est 2, 3, 4 ou 5 et m' est un entier compris entre 0 et 2n'.

2. Procédé selon la revendication 1, dans lequel n est 1.

3. Procédé selon la revendication 1 ou 2 dans lequel n' est 2.

4. Procédé selon l'une quelconque des revendications 1 à 3, dans lequel m est 0.

5. Procédé selon l'une quelconque des revendications 1 à 4 dans lequel m' est 0.

6. Procédé selon la revendication 1, dans lequel le composé est la pentafluoroéthyl-trifluorométhyl-fluoroamine NF(CF₃) (C₂F₅) .

7. Composition constituée de, essentiellement constituée de, ou comprenant au moins un composé de formule générale (I)
F-N(CₙHₘF₍₂ₙ₊₁₎₋ₘ)(C_{n'}H_{m'}F_{(2n'+1)-m'}) (I)
dans laquelle n est 1, 2, 3, 4 ou 5 et m est un entier compris entre 0 et 2n et dans laquelle n' est 2, 3, 4 ou 5 et m' est un entier compris entre 0 et 2n' et au moins un composé supplémentaire choisi dans le groupe constitué d'un gaz inerte, une cétone perfluorée ou partiellement fluorée, un éther perfluoré ou partiellement fluoré, un ester perfluoré ou partiellement fluoré, un composé cyano perfluoré ou partiellement fluoré et un composé hydrocarboné.

8. Composition selon la revendication 7 constituée de, essentiellement constituée de, ou comprenant NF(CF₃) (C₂F₅) et au moins un composé choisi dans le groupe constitué d'un gaz inerte, une cétone perfluorée ou partiellement fluorée, un éther perfluoré ou partiellement fluoré, un ester perfluoré ou partiellement fluoré, un composé cyano perfluoré ou partiellement fluoré et un composé hydrocarboné.

9. Composition selon la revendication 8 constituée de, essentiellement constituée de, ou comprenant NF(CF₃) (C₂F₅) et au moins un composé choisi dans le groupe constitué d'air, air synthétique, un composant d'air, N₂, O₂, CO₂, N₂O, He, Ne, Ar, Xe ou SF₆; de préférence constituée de, essentiellement constituée de, ou comprenant NF(CF₃) (C₂F₅) et N₂.

10. Appareil pour la génération, la distribution et/ou l'utilisation d'énergie électrique, où l'appareil comprend une partie active électrique agencée dans un boîtier étanche aux gaz, ledit boîtier étanche aux gaz contenant un milieu isolant constitué de, essentiellement constitué de, ou comprenant au moins un composé de formule générale (I)
F-N(CₙHₘF₍₂ₙ₊₁₎₋ₘ)(C_{n'}H_{m'}F_{(2n'+1)-m'}) (I)
dans laquelle n est 1, 2, 3, 4 ou 5 et m est un entier compris entre 0 et 2n et dans laquelle n' est 2, 3, 4 ou 5 et m' est un entier compris entre 0 et 2n' ;
ou contenant un milieu isolant constitué de, essentiellement constitué de, ou comprenant la composition selon l'une quelconque des revendications 7 à 9.

11. Appareil selon la revendication 10, dans lequel le milieu isolant est constitué de, est essentiellement constitué de, ou comprend NF(CF₃)(C₂F₅).

12. Appareil selon la revendication 10 ou 11, où l'appareil est un mécanisme de commutation à moyenne tension ou haute tension.

13. Utilisation d'un composé de formule générale (I) :
F-N(CₙHₘF₍₂ₙ₊₁₎₋ₘ)(C_{n'}H_{m'}F_{(2n'+1)-m'}) (I)
dans laquelle n est 1, 2, 3, 4 ou 5 et m est un entier compris entre 0 et 2n et dans laquelle n' est 2, 3, 4 ou 5 et m' est un entier compris entre 0 et 2n' en tant que milieu diélectrique pour isoler une partie active électrique.
